(19) Europäisches Patentamt
European Patent Office
Office européen des brevets

(11) Veröffentlichungsnummer: **0 439 845 A2**

## (12) EUROPÄISCHE PATENTANMELDUNG

(21) Anmeldenummer: **90125844.2**

(51) Int. Cl.[5]: **C08G 77/62**, C07F 7/12

(22) Anmeldetag: **31.12.90**

(30) Priorität: **27.01.90 DE 4002384**

(43) Veröffentlichungstag der Anmeldung:
**07.08.91 Patentblatt 91/32**

(84) Benannte Vertragsstaaten:
**BE DE ES FR GB IT NL**

(71) Anmelder: **HOECHST AKTIENGESELLSCHAFT**
**Postfach 80 03 20**
**W-6230 Frankfurt am Main 80(DE)**

(72) Erfinder: **Vaahs, Tilo, Dr.**
**Am Flachsland 54**
**W-6233 Kelkheim/Taunus(DE)**
Erfinder: **Kleiner, Hans-Jerg, Dr.**
**Altkönigstrasse 11a**
**W-6242 Kronberg(DE)**

# (54) Alpha-Omega-Chlorsilazane und Verfahren zur ihrer Herstellung.

(57) Die Erfindung betrifft ein Verfahren zur Herstellung von α,ω-Chlorsilazanen, das darin besteht, daß man ein Oligohydridoorganylsilazan der Formel $[-RSiH-NH-]_n$, worin n etwa 3 bis etwa 12 ist, mit mindestens einem der Chlorsilane $R^1HSiCl_2$, $R^2R^3SiCl_2$, $R^4SiCl_3$, $Cl_2R^5SiCH_2CH_2SiR^5Cl_2$ oder $Cl_3SiCH_2CH_2SiR^6Cl_2$ bei -20° G bis +50° C umsetzt, wobei R = $C_1$-$C_6$-Alkyl oder $C_2$-$C_6$-Alkenyl und unabhängig voneinander $R^1$-$R^6$ = H, $C_1$-$C_6$-Alkyl oder $C_2$-$C_6$-Alkenyl ist. Außerdem betrifft die Erfindung die nach diesem Verfahren erhältlichen neuen α,ω-Chlorsilazane.

EP 0 439 845 A2

# α,ω-CHLORSILAZANE UND VERFAHREN ZU IHRER HERSTELLUNG

Die Erfindung betrifft neue chlorhaltige Silazane sowie ein Verfahren zu ihrer Herstellung. Die erfindungsgemäßen chlorhaltigen Silazane, im folgenden auch kurz als α,ω-Chlorsilazane bezeichnet, können durch Erhitzen in polymere Chlorsilazane umgewandelt werden. Diese können nun ihrerseits zunächst in chlorfreie Polysilazane und dann in Siliciumnitrid enthaltende keramische Materialien überführt werden.

Die Herstellung von Polysilazanen aus anderen Silazanen wurde bereits beschrieben (US-PS 4 482 669, US-PS 4 720 532, PCT-WO 88/01260), ebenfalls die Pyrolyse von Polysilazanen zu Siliciumnitrid enthaltenden keramischen Materialien (R.R. Wills et al., Ceramic Bulletin, Vol. 62 (1983) 904-915).

Zur Herstellung von oligomeren oder niedermolekularen Silazanen als Zwischenprodukte für Polysilazane wurden im allgemeinen bisher Chlorsilane als Ausgangsmaterialien eingesetzt und diese mit Ammoniak, primären oder sekundären Aminen umgesetzt (US-PS 4 540 703, US-PS 4 543 344, US-PS 4 595 775, US-PS 4 397 828).

Die vorliegende Erfindung stellt nun neue Ausgangsmaterialien für Polysilazane zur Verfügung, nämlich α,ω-Chlorsilazane.

Ein Gegenstand der vorliegenden Erfindung ist ein Verfahren zur Herstellung von α,ω-Chlorsilazanen, dadurch gekennzeichnet, daß man ein Oligohydridoorganylsilazan der Formel $[-RSiH-NH-]_n$, worin n etwa 3 bis etwa 12 ist, mit mindestens einem der Chlorsilane $R^1HSiCl_2$, $R^2R^3SiCl_2$, $R^4SiCl_3$, $Cl_2R^5SiCH_2CH_2SiR^5Cl_2$ oder $Cl_3SiCH_2CH_2SiR^6Cl_2$ bei -20°C bis +50°C umsetzt, wobei R = $C_1$-$C_6$-Alkyl oder $C_2$-$C_6$-Alkenyl und unabhängig voneinander $R^1$-$R^6$ = H, $C_1$-$C_6$-Alkyl oder $C_2$-$C_6$-Alkenyl ist.

Vorzugsweise ist R = $CH_3$ und unabhängig voneinander $R^1$-$R^6$ = H, $C_1$-$C_3$-Alkyl oder $C_2$-$C_3$-Alkenyl. Besonders bevorzugt ist R = $CH_3$ und unabhängig voneinander $R^1$-$R^6$ = H, $CH_3$ oder Vinyl.

Die als Ausgangsmaterialien eingesetzten Chlorsilane $R^1HSiCl_2$, $R^2R^3SiCl_2$, $R^4SiCl_3$ sind im Handel erhältlich, die ethylenverbrückten Chlorsilane $Cl_2R^5SiCH_2CH_2SiR^5Cl_2$ und $Cl_3SiCH_2CH_2SiR^6Cl_2$ sind durch eine Hydrosilylierung von $R^1HSiCl_2$ und Ethin zugänglich, oder durch Hydrosilylierung von Vinyltrichlorsilan und $R^1HSiCl_2$. Die weiterhin als Ausgangsmaterial verwendeten Oligohydridoorganylsilazane werden hergestellt, indem man Dichlorhydridoorganylsilan $RSiHCl_2$, wobei R die obige Bedeutung besitzt, mit $NH_3$ in einem Lösungsmittel umsetzt, wie in US-PS 4 482 669 beschrieben (siehe dort insbesondere Spalte 4, 5, 7, 8). Dabei entsteht im allgemeinen ein Gemisch von linearen und cyclischen Oligohydridoorganylsilazanen $[-RSiH-NH-]_n$, mit n etwa 3 bis etwa 12. Zur Umsetzung mit den genannten Chlorsilanen werden vorzugsweise die Oligohydridoorganylsilazane $[-RSiH-NH-]_n$ ohne Lösungsmittel vorgelegt und die Chlorsilane vorsichtig zugegeben. Die Reaktionstemperatur beträgt dabei -20°C bis +50°C, vorzugsweise -10°C bis 0°C. Es ist auch möglich, die Reaktion in einem Lösungsmittel, welches mit den Reaktanten nicht reagiert, durchzuführen. So kann das Oligosilazan in einem Lösungsmittel oder als Reinsubstanz vorgelegt und das Chlorsilan in reiner Form oder als Lösung zugegeben werden. Für die Reaktion geeignete Lösungsmittel sind z.B. gesättigte aliphatische oder aromatische Kohlenwasserstoffe wie n-Pentan, Cyclohexan, Toluol oder chlorierte Kohlenwasserstoffe wie Chloroform oder Chlorbenzol, oder Ether wie Diethylether oder THF.

Gegebenenfalls kann das Verfahren auch unter vermindertem Druck durchgeführt werden. Das Verfahren kann auch kontinuierlich gestaltet werden. Die hergestellten neuen α,ω-Chlorsilazane besitzen lineare molekulare Struktur, die durch die Formel (I)

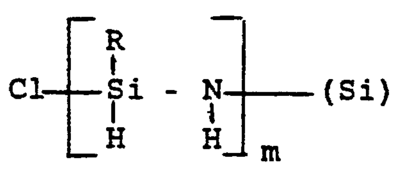

(I)

wiedergegeben werden kann. Dabei nimmt m Werte zwischen 1 und 12 an und -(Si) bedeutet je nach eingesetztem Chlorsilan:

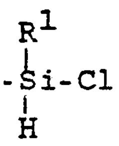 , 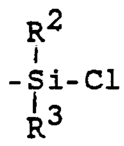 , 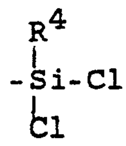 , 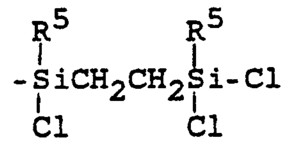 oder

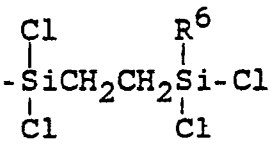 .

Ein weiterer Gegenstand der Erfindung sind demgemäß α,ω-Chlorsilazane der Formel (I)

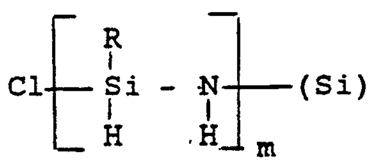 (I)

wobei -(Si) die obigen Reste bedeuten kann.

Dabei ist R = $C_1$-$C_6$-Alkyl oder $C_2$-$C_6$-Alkenyl und unabhängig voneinander $R^1$-$R^6$ = H, $C_1$-$C_6$-Alkyl oder $C_2$-$C_6$-Alkenyl. Die Werte von m liegen zwischen 1 und 12.

Die erfindungsgemäßen α,ω-Chlorsilazane der Formel (I) können wie folgt in Siliciumnitrid enthaltendes keramisches Material umgewandelt werden:
Man erhitzt ohne Lösungsmittel auf Temperaturen zwischen 100 °C und 300 °C, wobei ein Umbau der linearen α,ω-Chlorsilazane in polymere Hydridochlorsilazane stattfindet. Vorzugsweise erhitzt man auf Temperaturen zwischen 150 °C und 250 °C.

Diese polymeren Hydridochlorsilazane können durch weiteres Erhitzen in Inertgasatmosphäre oder in Ammoniakatmosphäre auf bis zu 1600 °C in siliciumnitridhaltiges keramisches Material überführt werden (siehe z.B. DE-OS 3 733 727).

**Versuchsbericht**

Herstellung von Oligohydridomethylsilazan $[-CH_3SiH-NH-]_n$

In 800 ml absolutem THF wurden 100 ml (0,97 mol) Methyldichlorsilan gelöst und für 3 Stunden Ammoniak eingeleitet (Einleitgeschwindigkeit: 0,5 l/min). Durch Kühlen mit einem Eisbad wurde die Reaktionstemperatur im Bereich von 10 bis 15 °C gehalten. Zur Vervollständigung der Reaktion wurde 1 h bei Raumtemperatur gerührt und anschließend unter Argon das Ammoniumchlorid abgetrennt. Der Niederschlag wurde zweimal mit je 350 ml THF gewaschen und die vereinigten THF-Lösungen unter reduziertem Druck eingeengt. Man erhielt ein klares, leicht bewegliches Öl von $[-CH_3SiH-NH-]_n$ mit n = 3-12 in einer Ausbeute von 44,5 g = 78 % der Theorie.

**Beispiel 1**

Reaktion von $[-CH_3SiH-NH-]_n$ mit $CH_3SiHCl_2$

100 g (1,7 mol, bezogen auf n = 1) $[-CH_3SiH-NH-]_n$ (n = 3-12) wurden auf -5 °C abgekühlt. Dann tropfte man unter Rühren langsam 48,9 g (0,425 mol) $CH_3SiHCl_2$ ein und behielt die genannte Temperatur noch 60 Minuten bei.

Anschließend wurden 200 ml THF zugegeben und bis zur Sättigung Dimethylamin eingeleitet, ohne daß die Temperatur des Reaktionsgemisches 0 °C überstieg. Das ausgefallene Dimethylaminhydrochlorid wurde abfiltriert und das Filtrat vom Lösungsmittel und flüchtigen Anteilen befreit.

Das resultierende ölige Produkt wurde gaschromatographisch getrennt und die einzelnen Fraktionen massenspektrometrisch untersucht.

Dabei wurden unter anderem die folgenden Moleküle detektiert:

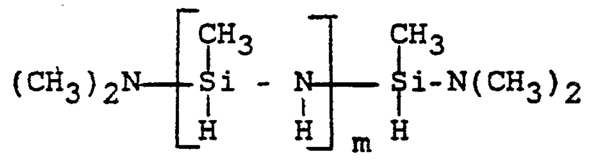

m = 1 - 4

Diese Dimethylaminoderivate entstehen aus den reaktiven α,ω-Dichlorsilazanen:

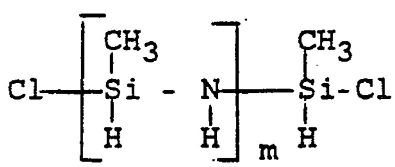

**Beispiel 2**

Reaktion von [$-CH_3SiH-NH-]_n$ mit $CH_3SiHCl_2$ und anschließende Herstellung eines polymeren Hydridochlorsilazans.

100 g (1,0 mol, bezogen auf n = 1) [$-CH_3SiH-NH-]_n$ (n = 3-12) wurden auf -5°C abgekühlt. Dann tropfte man unter Rühren langsam 48,9 g (0,425 mol) $CH_3SiHCl_2$ ein und behielt die genannte Temperatur noch 60 Minuten bei.

Anschließend wurde innerhalb 4 h auf 220°C Ölbadtemperatur erhitzt. Die Innentemperatur lag bei 190°C. Nach 2 h bei dieser Temperatur ließ man abkühlen.

Bei 20°C blieben 110 g einer harten, spröden Substanz zurück, die in THF gelöst und von Unlöslichem abfiltriert wurde. Das Filtrat wurde vom Lösungsmittel befreit und zurück blieb ein klares, bei 20°C glasartig sprödes Material, welches einen bei ca. 120°C liegenden reproduzierbaren Erweichungspunkt besaß (95 g).

Analysendaten (in Gew.-%):

Si 44,7 % ; C 19,2 % ; N 17,9 % ; H 6,9 % ; Cl 11,3 %

Keramische Ausbeute bei Pyrolyse in $N_2$ bis 1100°C: 68,5 %

Keramische Ausbeute bei Pyrolyse in $NH_3$ bis 1100°C: 58,9 %

**Beispiel 3**

Reaktion von [$-CH_3SiH-NH-]_n$ mit Vinylmethyldichlorsilan

100 g (1,7 mol, bezogen auf n = 1) [$-CH_3SiH-NH-]_n$ (n = 3-12) wurden auf -5°C abgekühlt. Dann tropfte man unter Rühren langsam 70,5 g (0,5 mol) Vinylmethyldichlorsilan ein und behielt die genannte Temperatur noch 60 Minuten bei.

Anschließend wurden 200 ml THF zugegeben und bis zur Sättigung Dimethylamin eingeleitet, ohne daß die Temperatur des Reaktionsgemisches 0°C überstieg.

Das ausgefallene Dimethylaminhydrochlorid wurde abfiltriert und das Filtrat vom Lösungsmittel befreit.

Das resultierende ölige Produkt wurde gaschromatographisch getrennt und die einzelnen Fraktionen massenspektrometrisch untersucht.

Dabei wurden unter anderem die folgenden Moleküle detektiert:

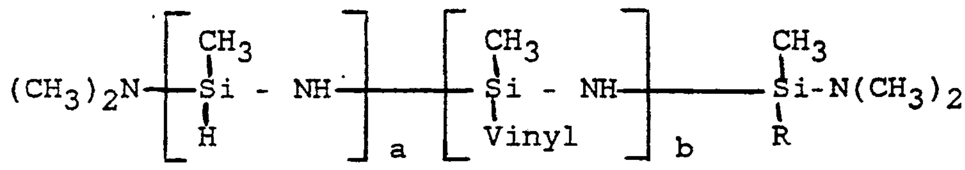

mit folgenden Variablenwerten:

| | | | |
|---|---|---|---|
| 1. | a = 1 | b = 0 | R = Vinyl |
| 2. | a = 2 | b = 0 | R = Vinyl |
| 3. | a = 3 | b = 0 | R = Vinyl |
| 4. | a = 1 | b = 1 | R = Vinyl |
| 5. | a = 2 | b = 1 | R = Vinyl |
| 6. | a = 3 | b = 1 | R = H |

Diese Dimethylaminoderivate entstanden aus den entsprechenden $\alpha,\omega$-Dichlorsilazanen.

**Beispiel 4**

Reaktion von $[-CH_3SiH-NH-]_n$ mit Vinylmethyldichlorsilan und anschließende Herstellung eines polymeren Hydridochlorsilazans.

100 g (1,7 mol, bezogen auf n = 1) $[-CH_3SiH-NH-]_n$ (n = 3-12) wurden auf -5° C abgekühlt. Dann tropfte man unter Rühren langsam 70,5 g (0,5 mol) Vinylmethyldichlorsilan ein und behielt die genannte Temperatur noch 60 Minuten bei.

Anschließend wurde innerhalb 4 h auf 220° C Ölbadtemperatur erhitzt. Die Innentemperatur lag bei 205° C. Nach 2 h ließ man abkühlen.

Bei 20° C blieben 114 g eines Gemisches aus sehr zähem Öl und Feststoffanteilen zurück. Es wurde THF zugegeben und abfiltriert. Das klare Filtrat wurde vom Lösungsmittel befreit und es blieb klares, leicht gelbliches, sehr zähes Öl zurück, das eine Viskosität von ca. 5 Poise aufwies.

Analysendaten (in Gew.-%):
Si 38,2 % ; C 31,1 % ; N 16,2 % ; H 7,2 % ; Cl 7,3 %
Keramische Ausbeute bei Pyrolyse in $N_2$ bis 1100° C: 54,2 %
Keramische Ausbeute bei Pyrolyse in $NH_3$ bis 1100° C: 42,1 %

**Patentansprüche**

**1.** Verfahren zur Herstellung von $\alpha,\omega$-Chlorsilazanen, dadurch gekennzeichnet, daß man ein Oligohydridoorganylsilazan der Formel $[-RSiH-NH-]_n$, worin n etwa 3 bis etwa 12 ist, mit mindestens einem der Chlorsilane $R^1HSiCl_2$, $R^2R^3SiCl_2$, $R^4SiCl_3$, $Cl_2R^5SiCH_2CH_2SiR^5Cl_2$ oder $Cl_3SiCH_2CH_2SiR^6Cl_2$ bei -20° C bis +50° C umsetzt, wobei R = $C_1$-$C_6$-Alkyl oder $C_2$-$C_6$-Alkenyl und unabhängig voneinander $R^1$-$R^6$ = H, $C_1$-$C_6$-Alkyl oder $C_2$-$C_6$-Alkenyl ist.

**2.** Verfahren nach Anspruch 1, dadurch gekennzeichnet, daß R = $CH_3$ und unabhängig voneinander $R^1$-$R^6$ = H, $C_1$-$C_3$-Alkyl oder $C_2$-$C_3$-Alkenyl ist.

**3.** Verfahren nach Anspruch 1, dadurch gekennzeichnet, daß R = $CH_3$ und unabhängig voneinander $R^1$-$R^6$ = H, $CH_3$ oder Vinyl ist.

**4.** $\alpha,\omega$-Chlorsilazane, erhältlich nach dem Verfahren gemäß einem der Ansprüche 1 bis 3.

**5.** a,w-Chlorsilazane der Formel I

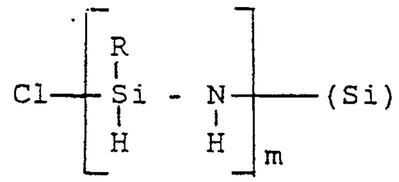

(I)

worin m Werte zwischen 1 und 12 annimmt und -(Si) ein Silylrest der Formel

$-SiHR^1Cl$, $-SiR^2R^3Cl$, $-SiR^4Cl_2$, $-SiR^5Cl-CH_2CH_2-SiR^5Cl_2$, oder $-SiCl_2-CH_2CH_2-SiR^6Cl_2$ ist,

wobei
R = $C_1$-$C_6$-Alkyl oder $C_2$-$C_6$-Alkenyl und unabhängig voneinander $R^1$-$R^6$ = H, $C_1$-$C_6$-Alkyl oder $C_2$-$C_6$-Alkenyl ist.

6. α,ω-Chlorsilazane nach Anspruch 5, dadurch gekennzeichnet, daß R = $CH_3$ und unabhängig voneinander $R^1$- $R^6$ = H, $C_1$-$C_3$-Alkyl oder $C_2$-$C_3$-Alkenyl ist.

7. α,ω-Chlorsilazane nach Anspruch 5, dadurch gekennzeichnet, daß R = $CH_3$ und unabhängig voneinander $R^1$-$R^6$ = H, $CH_3$ oder Vinyl ist.

**Patentansprüche für folgenden Vertragsstaat: ES**

1. Verfahren zur Herstellung von α,ω-Chlorsilazanen, dadurch gekennzeichnet, daß man ein Oligohydridoorganylsilazan der Formel $[-RSiH-NH-]_n$, worin n etwa 3 bis etwa 12 ist, mit mindestens einem der Chlorsilane $R^1HSiCl_2$, $R^2R^3SiCl_2$, $R^4SiCl_3$, $Cl_2R^5SiCH_2CH_2SiR^5Cl_2$ oder $Cl_3SiCH_2CH_2SiR^6Cl_2$ bei -20°C bis +50°C umsetzt, wobei R = $C_1$-$C_6$-Alkyl oder $C_2$-$C_6$-Alkenyl und unabhängig voneinander $R^1$-$R^6$ = H, $C_1$-$C_6$-Alkyl oder $C_2$-$C_6$-Alkenyl ist.

2. Verfahren nach Anspruch 1, dadurch gekennzeichnet, daß R = $CH_3$ und unabhängig voneinander $R^1$-$R^6$ = H, $C_1$-$C_3$-Alkyl oder $C_2$-$C_3$-Alkenyl ist.

3. Verfahren nach Anspruch 1, dadurch gekennzeichnet, daß R = $CH_3$ und unabhängig voneinander $R^1$-$R^6$ = H, $CH_3$ oder Vinyl ist.